Europäisches Patentamt

European Patent Office

Office européen des brevets

(19)

(11) Numéro de publication: **0 306 357**
**A1**

(12) **DEMANDE DE BREVET EUROPEEN**

(21) Numéro de dépôt: 88401819.3

(22) Date de dépôt: 12.07.88

(51) Int. Cl.⁴: **G 06 F 12/02**

(30) Priorité: 15.07.87 FR 8709970
27.04.88 FR 8805631

(43) Date de publication de la demande:
08.03.89 Bulletin 89/10

(84) Etats contractants désignés: **DE FR GB IT NL**

(71) Demandeur: **CENTRE NATIONAL DE LA RECHERCHE SCIENTIFIQUE**
15, quai Anatole France
F-75007 Paris (FR)

**INSTITUT NATIONAL DE RECHERCHE EN INFORMATIQUE ET EN AUTOMATIQUE**
Domaine de Voluceau Rocquencourt B.P. 105
F-78153 Le ChesnayCédex (FR)

(72) Inventeur: **Faudemay, Pascal**
34 rue du Laos
F-75015 Paris (FR)

Bechennec, Jean-Luc
3 Allée de la Haute Place
F-93160 Noisy le Grand (FR)

Etiemble, Daniel
14 rue Nélaton
F-75015 Paris (FR)

Gardarin, Georges
6 avenue du Panorama
F-94230 Cachan (FR)

Pucheral, Philippe
3 Square J.P. Martinez
F-94000 Creteil (FR)

Thevenin, Jean-Marc
60 rue Champ Lagarde
F-78000 Versailles (FR)

(74) Mandataire: **Rodhain, Claude et al**
Cabinet Claude Rodhain 30, rue la Boétie
F-75008 Paris (FR)

(54) Unité de gestion d'accès en mémoire, à identifiants logiques invariants, notamment pour la gestion de bases de données.

(57) Le domaine de l'invention est celui des unités de gestion d'accès en mémoire, du type destiné à être interposé entre l'unité centrale et les unités de mémorisation d'un ordinateur, notamment pour la gestion de bases de données.

L'objectif est notamment de rendre les identifiants d'objets complètement invariants, de façon à rendre les adresses d'objets transparentes au déplacement de l'objet dans les unités de mémorisation, ainsi que de supporter l'existence de versions alternatives, et/ou historiques aux objets accédés.

Selon l'invention, l'unité comprend au moins deux étages de tables d'adressage regroupées au sein d'un premier étage supérieur (18) et d'un second étage inférieur (19) d'adressage, ledit premier étage (18) fournissant en sortie une adresse logique intermédiaire (17), et ledit second étage inférieur (18) fournissant une information d'adresse physique résultat d'objet.

FIG.1

**Description**

## "UNITE DE GESTION D'ACCES EN MEMOIRE, A IDENTIFIANTS LOGIQUES INVARIANTS, NOTAMMENT POUR LA GESTION DE BASES DE DONNEES".

Le domaine de l'invention est celui des unités de gestion d'accès en mémoire, du type destinées à être interposées entre l'unité centrale et les unités de mémorisation d'un ordinateur, notamment pour la gestion de bases de données.

Une MMU (unité de gestion mémoire ou UGM) est un circuit qui fait correspondre une adresse physique à une adresse logique dans une architecture de mémoire virtuelle.

On connaît déjà un type de MMU réalisant cette correspondance à l'aide d'une mémoire associative (cf Fairchild "The Clipper Microprocessor : User's Manual" (le microprocesseur Clipper : Manuel de l'utilisateur), Addison Welsey, 1987). Cependant la capacité de ces mémoires ne permet de connaître l'adresse physique que pour un petit nombre d'adresses logiques de page, quelques centaines actuellement. Dans les applications classiques il peut s'agir d'adresses de pages en nombre suffisant pour gérer un espace virtuel acceptable. Il n'en est pas de même pour les applications de bases de données, où il est maintenant nécessaire de gérer avec peu de localité un grand nombre d'objets dispersés dans une grande mémoire. Ce problème devient critique lorsque les données sont traitées par un processeur général à hautes performances, ou plus encore par un processeur spécialisé efficace.

On connaît également des mémoires virtuelles fonctionnant avec hachage de l'adresse logique source. Une illustration de ce principe peut être trouvée dans le brevet américain US 4 356 549 (CHUEH) délivré le 26 octobre 1982. Les MMU de ce type établissent une relation surjective entre les adresses logiques sources, et les adresses physiques montées dans la mémoire cache, du fait de l'opération de hachage. Elles supposent donc qu'il existe d'une part une gestion de collision, permettant de vérifier que l'enregistrement sélectionné en mémoire cache à partir de l'adresse logique hâchée correspond bien à l'enregistrement cherché, et d'autre part, dans le cas contraire, la possibilité de faire monter la donnée recherchée dans un espace de débordement de la mémoire cache. Ce principe est tout à fait inadapté à la gestion des mémoires de gros volume, tel que les mémoires de bases de données, qui requièrent un simple calcul d'adresse.

On connaît également un système de hiérarchie de tables, pour unité de gestion d'accès en mémoire, tel que décrit dans le brevet américain n°3 614 746, délivré le 19 octobre 1971 au nom de J. Klinkhamer.

La structure décrite dans ce document, consiste en trois jeux de tables hiérarchisées, correspondant respectivement à un jeu de tables de segments, un jeu de tables de pages, et un jeu de tables de lignes de pages, chaque jeu de tables étant adressé par un mot d'adresse absolue construit à partir d'une part, d'une adresse indirecte prélevée dans l'identifiant logique fournie par l'unité de traitement, et d'autre part, d'une seconde adresse indirecte provenant du jeu de tables supérieur dans la hiérarchie.

Dans ce type de structure connue, l'unité de gestion mémoire (ou MMU), assure l'accès à des objets, de sémantique quelconque, qui ont une taille généralement très inférieure à la page.

Le support d'identifiants au niveau de l'objet permet de réduire de façon drastique les transferts lors des opérations d'interrogation des bases de données. Les relations (ou fichiers) résultats se réduisent à des suites d'identifiants et ne contiennent pas de données. L'operation de projection (suppression de certains attributs ou champs) sans dédoublage disparaît. Le principe de ces MMU permettrait d'utiliser des identifiants "physiques" qui sont modifiés en cas de changement de valeur de l'objet.

Deux limites apparaissent toutefois dans ce type de structure de tables hiérarchisées :
- les identifiants sont des identifiants que l'on peut qualifier de "physiques", dans la mesure où ils sont modifiés en cas de modification de la valeur de l'objet référencé. Il n'y a donc pas invariance des identifiants, et ceci peut être grandement pénalisant dans le cas d'objets partagés où l'on aura alors des mises à jour multiples.
- moyennant une gestion de références arrière, il est possible d'utiliser ces identifiants pour gérer les graphes d'objets, nécessaires pour des modèles de données généraux. Cependant cette gestion de références arrière manque de simplicité, et elle est coûteuse à mettre en oeuvre.

L'invention a pour objectif de pallier ces différents inconvénients des dispositifs existants, notamment au travers de deux caractéristiques essentielles, nouvelles et complémentaires :
- l'accès à l'unité de gestion au moyen d'identifiants "logiques" d'objets au lieu d'identifiants "physiques";
- la création du concept d'un identifiant logique étendu, incluant une référence de version d'objet, de façon à pouvoir accéder pour un même objet à des versions différentes, alternatives ou historiques, de l'objet. La mise en oeuvre de ce concept se traduit par la création de tables de versions des objets, que l'on peut accéder à travers diverses modalités ;

Plus précisément, un premier objectif de la présente invention est, en conséquence, de fournir une unité de gestion d'accès en mémoire permettant d'offrir des identifiants d'objets complètement invariants, de façon à rendre les adresses d'objets appelés par des requêtes de l'unité centrale de l'ordinateur, transparentes au déplacement de l'objet dans les unités de mémorisation ou à sa modification. Il s'agit de supprimer la corrélation entre l'identifiant de l'objet dans la requête, et la valeur et la position de l'objet correspondant en mémoire.

Un objectif complémentaire de ce premier objectif de l'invention est de fournir une telle unité de gestion d'accès en mémoire qui permette une gestion de graphes d'objets sans références arrières. Ainsi par exemple, dans les solutions connues à gestion d'identifiants physiques, dans le cas de deux objets liés, il est nécessaire de remonter à l'objet source lorsque l'objet cible est déplacé, afin de modifier l'identifiant physique de l'objet cible parmi les attributs de l'objet source. L'objectif de la présente invention est de fournir une décorrélation entre l'identifiant de l'objet cible, et son placement physique en mémoire, afin d'économiser la remontée et la mise à jour de l'objet source. Ainsi, par exemple, la jointure par traversée de graphes, considérée comme la solution logicielle la plus rapide, devient alors possible.

Un troisième objectif de l'invention est de fournir une telle unité de gestion de mémoire, qui permette de supporter l'existence de versions alternatives, et/ou historiques aux objets accédés. Une application avantageuse d'une telle gestion de versions d'objets est à trouver par exemple dans le cas de bases de données de gestion d'une entreprise (avec stockage des valeurs historiques successives des données comptables et financières), ou dans le domaine de la CAO (mémorisation des versions successives ou concurrentes de conception, par une ou plusieurs équipes).

L'invention a ainsi pour avantage de supporter des modèles relationnels étendus, du type, par exemple, du modèle FAD (BANCILHON, F., BRIGGS, T., KHOSHAFIAN, S., VALDURIEZ, P., "FAD, a Powerful and Simple Database Language", Proc. 13th Int. Conf. on Very Large Data Bases, Brighton, 1987).

Ces objectifs de l'invention ainsi que d'autres qui apparaîtront par la suite sont atteints à l'aide d'une unité de gestion d'accès en mémoire, destinée à être interposée entre l'unité centrale et des unités de mémorisation d'un ordinateur, notamment pour la gestion de bases de données, de façon à réaliser par exemple une opération d'association, à des adresses logiques sources appelées par des requêtes de l'unité centrale, des adresses physiques résultats d'objets stockés dans lesdites unités de mémorisation, et constituant le résultat de ladite association,

lesdites adresses logiques étant constituées d'au moins deux champs distincts contenant chacun une adresse indirecte, chaque champ correspondant à un adressage indirect de niveau différent,

unité du type comprenant une hiérarchie d'ensembles de tables d'adressage, contenues dans au moins un espace mémoire spécifique, ladite unité de gestion et susceptibles de délivrer chacune une information secondaire d'adressage lorsqu'elles sont accédées,

unité caractérisée en ce qu'elle comprend au moins deux étages de tables d'adressage regroupées au sein d'un premier étage supérieur et d'un second étage inférieur d'adressage,

en ce que ledit premier étage supérieur d'adressage comprend un jeu d'au moins deux ensembles de tables d'adressage organisé de façon hiérarchique, chacun des ensembles de tables correspondant à un desdits niveaux d'adressage indirect de l'adresse logique source, ledit premier étage fournissant en sortie une adresse logique intermédiaire constituée d'au moins deux champs distincts correspondant chacun à un niveau d'adressage indirect distinct,

et en ce que ledit second étage inférieur comprend un jeu d'au moins deux ensembles de tables d'adressage inférieurs organisé de façon hiérarchique, chacun des ensembles de tables correspondant à un niveau distinct d'adressage indirect de ladite adresse logique intermédiaire fournie en sortie dudit étage supérieur d'adressage.

Ainsi, on obtient des identifiants logiques, qui restent invariants même en cas de modification de l'objet accédé.

Dans un mode de réalisation avantageux de l'invention, ladite unité est caractérisée en ce que ledit premier étage supérieur d'adressage comprend un ensemble de tables d'adressage des versions d'objets accédés, du type des versions alternatives ou historiques des objets accédés,

en ce que ledit ensemble de tables des versions est adressé à partir d'informations secondaires d'adressage contenues dans l'ensemble de tables d'adressage immédiatement supérieur et/ou d'un numéro de version fourni par l'unité centrale en entrée de l'unité de gestion d'accès en mémoire,

et en ce que chacun des enregistrements contenus dans ledit ensemble de tables des versions comprend au moins un champ de stockage d'un identifiant physique de version, et un champ de stockage d'une étiquette de version.

Ainsi, le support des versions au niveau de la mémoire virtuelle permet une gestion de celles-ci plus indépendante du système de bases de données qu'une gestion utilisant impérativement des informations du journal ou des informations contenues dans les objets. Le résultat d'un accès à un objet (ou à un ensemble d'objets), selon l'invention, peut ainsi être soit une adresse d'objets, soit un ensemble d'identifiants logiques d'objets, de numéros de versions, et d'étiquettes de versions.

D'autres caractéristiques et avantages de l'invention apparaîtront à la lecture suivante de modes de réalisation préférentiels de l'invention donnés à titre illustratif, et des dessins annexés dans lesquels :

- la figure 1 schématise la structure à deux étages d'adressage de l'unité de gestion d'accès en mémoire selon l'invention,

- la figure 2 illustre la composition d'un enregistrement d'une table des versions de l'unité de gestion de l'invention,

- la figure 3 illustre le mode de réalisation préférentiel des tables de versions sous forme de listes circulaires à entêtes,

- la figure 4 est un schéma complet d'implantation d'un premier mode de réalisation avantageux de l'unité de gestion d'accès en mémoire de l'invention, supportant des versions d'objets,

- la figure 5 est un schéma complet d'implantation d'un second mode de réalisation avantageux de l'unité de gestion d'accès en mémoire de l'invention, supportant des versions d'objets.

Dans la solution connue, la conversion des identifiants physiques en adresse physique repose de façon classique sur des indirections à plusieurs niveaux. L'identifiant est composé de plusieurs champs : numéro de segment (implicite), numéro de paquet de placement, numéro de page, numéro d'objet <N°PAQ, N°PAG, N°OBJ>. Le numéro de paquet est l'indice dans la table des paquets du segment d'un élément qui contient l'adresse d'une table des pages. Le numéro de page est l'indice dans la table des pages d'un élément qui contient l'adresse d'une table des objets. L'adresse peut être une adresse en mémoire ou sur disque, ces deux cas sont distingués par un bit de l'adresse. Le numéro d'objet est l'indice dans une table des objets d'un élément contenant l'adresse de l'objet recherché. Les pointeurs sur les tables de niveau inférieur peuvent être remplacés par des identifiants de ces tables, afin de permettre leur déplacement ou leur swapping sur disque. Il existe donc des "tables des tables".

Les tables sont des objets que nous définissons comme des objets de type "tableau", qui sont formés d'une suite d'éléments de même type et de longueur fixe précédés par le nombre d'éléments. Les opérations associées aux tableaux permettent, entre autres, l'accès au ième élément ou l'adjonction ou la suppression d'un dernier élément. L'espace physique alloué à une table est augmenté par granules dépendant de la taille de l'objet, ceci afin de limiter le nombre moyen de recopies d'un élément lors de l'adjonction de nouveaux éléments. Dans le cas des tables, cette adjonction intervient lorsque le nombre de paquets d'un segment, de pages d'un paquet ou d'objets dans une page, augmente. L'adresse d'un élément recherché dans une table peut être obtenue par le cache-MMU qui additionne le numéro de l'élément dans cette table avec l'adresse de celle-ci. Ces additions peuvent s'effectuer en utilisant des pistes distinctes pour l'adresse de début de table et pour l'adresse d'élément, ce qui conduit à des tables de longueur fixe, ou en utilisant des additionneurs, ce qui permet des tables de longueur variable. Le "cache-MMU" utilise des tables de longueur variable.

Le mécanisme énoncé dans le paragraphe précédent n'assure cependant pas l'invariance des identifiants. En effet, quand on modifie un objet, il faut modifier son identifiant. Un tel identifiant est appelé OID (Object Identifier) physique. Ceci peut être grandement pénalisant dans le cas d'objets partagés où l'on aura alors des mises à jour multiples.

Afin de pallier cet inconvénient on introduit une nouvelle notion : l'identifiant (ou OID) logique. Les OID physiques seront alors stockés dans un vecteur paginé. En effet, la place nécessaire pour stocker tous les identifiants physiques d'une relation (ou segment) sera supérieure à une page. De ce fait, le vecteur sera paginé et une hiérarchie de tables permettra l'accès aux pages contenant les identifiants physiques. Il convient de disposer d'une hiérarchie permettant de gérer un nombre suffisant d'objets dans un segment (donc d'identifiant physiques dans un vecteur paginé). Les identifiants physiques seront alors stockés dans des tables systèmes appelées tables des objets (TOBJ) 13. Ces TOBJ 13 seront accédées au travers des tables de niveau supérieur : les tables des pages logiques (TPAGL) 12, elles-mêmes accédées au moyen de tables de paquets logiques (TPAQL) 11. Un OID logique 10 est alors l'indice d'un identifiant physique dans le vecteur paginé. De plus, les identifiants physiques étant de taille fixe, il n'est jamais nécessaire de les déplacer, mais simplement de les remplacer, et de ce fait, un OID logique 10 est donc invariant et aura le format suivant : <N°PAQL, N° PAGL, N°Objet>. De même que pour les OID physiques, les divers champs de l'OID logique permettent de descendre la hiérarchie des tables décrivant le vecteur paginé.

Ce mécanisme permet d'offrir des identifiants d'objets invariants. En effet, si un objet est déplacé, son OID physique sera modifié comme précédemment, mais son OID logique, lui, n'aura aucune raison de l'être, et reste de ce fait transparent au déplacement d'objet.

Les TPAQL 11, TPAGL 12, et TOBJ 13, seront qualifiés de "tables logiques", alors que les tables des paquets 14 et de pages 15 physiques seront désignées par "tables physiques". Il est important de noter que la table des paquets logique 11 est seulement un niveau du vecteur paginé. Elle ne peut servir à un placement. En effet, le numéro de paquet logique ne peut être modifié en cas de changement de valeur d'un objet. Cependant, chaque niveau du vecteur paginé peut avoir une structure particulière, comme nous le verrons pour les tables des pages logiques 12.

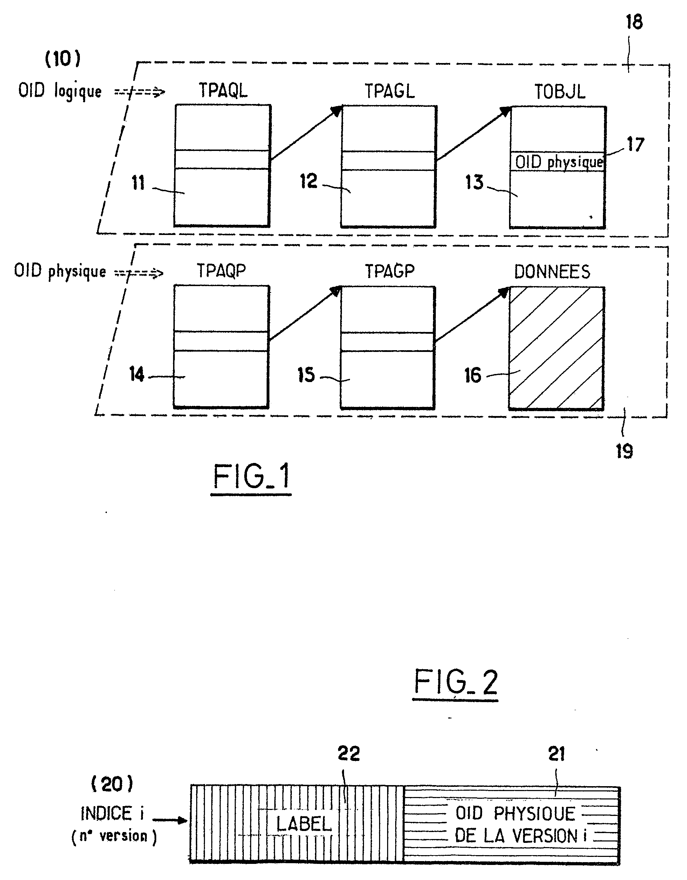

L'identifiant physique 17, lui représente donc une adresse logique intermédiaire correspond à un déplacement dans la page. En effet, en cas de modification de l'adresse d'un objet dans une page, il est aussi simple de modifier le déplacement correspondant à l'objet dans l'identifiant physique 17 (situé dans la TOBJ 13), que de changer la correspondance entre un numéro d'objet et le déplacement correspondant. Cette solution évite de consacrer un niveau de table à cette correspondance, et diminue donc, d'une unité, le nombre de niveaux de tables. Les niveaux de tables nécessaires au décodage des identifiants physiques sont donc au moins au nombre de deux, pour permettre un nombre suffisant d'identifiants et le placement des objets : les tables des paquets physiques (TPAQP) 14 et les tables des pages (TPAGP) 15 (FIGURE 1). Avec les pages de 4 K octets et des pointeurs ou identifiants sur 32 bits la taille autorisée pour un segment est ainsi de 4 giga-octets. Pour aller au delà de cette valeur des relations multi-segments ou un niveau supplémentaire de tables seraient nécessaires. La TPAQP 14 (ou plus généralement chaque niveau de tables physiques supérieur au tables des pages physiques) permet un placement des objets dans chaque segment. Pour les requêtes les plus fréquentes, il est ainsi possible de ne monter en mémoire que les objets effectivement nécessaires. Par contre, les identifiants logiques n'étant pas placés, il sera en général nécessaire d'avoir en mémoire l'ensemble des tables "logiques" d'une relation (TPAQL 11, TPAGL 12, TOBJ 13), sauf pour des accès tuple à tuple.

S'il existe des versions de l'objet nous associerons à chaque objet une table des versions (TVERS 30) de cet objet. L'adresse ou l'identifiant de cette table sera rangée dans la table des objets (TOBJ 13). Ceci revient à ajouter un niveau au vecteur paginé d'identifiants physiques. La table des versions 30 contiendra des éléments formés de paires <identifiant physique de version 21> <étiquette de version 22>. L'étiquette de version 22 est une information sur les caractéristiques spécifiques à la version considérée de l'objet, qui sont propres à cet objet (par exemple les droits d'accès à une version alternative d'un ensemble d'objets ne sont normalement pas rangés dans l'étiquette de version) (figure 2). Dans le cas le plus fréquent, l'étiquette de version 22 est utilisée pour les versions historiques, elle peut correspondre, par exemple, à la date d'enregistrement de cette version. Comme les tables de versions utilisées dans le cache-MMU ont au plus une page et que l'étiquette de version et l'identifiant ont 32 bits, le nombre maximum de versions est 512 ; en fait, il est alors d'au plus 510, compte tenu de l'entête de la table et de la duplication de la version courante.

L'élément correspondant à une version d'un objet peut être accédé à partir du numéro de version, qui est l'indice de cet élément dans la table de versions. Nous parlerons alors d'accès direct ; celui-ci est supporté par le dispositif matériel. Un autre mode d'accès aux versions d'un objet est l'accès ensembliste à l'ensemble des versions de cet objet, en vue d'une sélection pouvant faire intervenir l'étiquette de version. Bien que l'étiquette de version ne soit pas physiquement rangée dans le tuple, elle sera considérée comme un attribut créée par le système. Si l'étiquette represente la date d'enregistrement de l'objet, et si l'objet représente la promotion d'un individu à un emploi, il sera possible de sélectionner toutes les mesures rétroactives en comparant date d'enregistrement et date d'effet (que nous supposons être un des attributs crées par l'usager). Les résultats de la sélection doivent permettre d'accéder au verrou de chaque version de l'objet, que nous définirons plus loin.

Selon un aspect avantageux de l'invention, une version d'objets est identifiée à l'aide d'un ensemble de triplets <identifiant logique> <numéro de version> <étiquette de version>. Ce référencement des versions est par exemple adopté lors de la création d'une relation résultat après lecture de la table des versions.

Ces modes de référencement est essentiellement utile dans le cas de la manipulation de versions historiques d'un objet ; elle n'a pas de sens dans le cas de versions alternatives. Dans le cas de versions historiques, c'est-à-dire classées chronologiquement, l'accès à un ensemble de versions à partir d'un critère d'un intervalle de dates, s'effectue de la manière suivante :
- on range, dans une relation intermédiaire, l'ensemble des objets vérifiant le critère, sous la forme d'une liste d'identifiants étendus <identifiant logique> <numéro de version> <étiquette de version>. Chaque identifiant étendu est obtenu en prenant, d'une part, une valeur de l'identifiant logique, utilisée comme adresse, en faisant varier le numéro de version, et en associant, pour chaque numéro de version, l'étiquette de version correspondante, lue dans la table des versions 30 ;
- on effectue une sélection par logiciel sur cette relation intermédiaire, de façon à en extraire la liste des identifiants qui vérifie les critères cherchés, c'est-à-dire le critère de date de la version.

Dans un premier mode de réalisation, la date de la version peut se trouver dans l'étiquette de version, et l'opération d'extraction des objets pertinents, s'effectue directement sur la relation intermédiaire.

Dans un autre mode de réalisation, il peut être nécessaire d'accéder également à l'objet lui-même, et plus précisément, à au moins un attribut de l'objet, nécessaire à prendre en compte pour vérifier le critère de sélection. Dans ce cas, l'accès à l'objet s'effectue, par exemple, par une nouvelle traversée de la hiérarchie de table de l'unité de gestion.

On constate donc que le concept d'identifiant étendu, ainsi que le fait de construire les relations résultats par simple stockage de ces identifiants étendus, permet une très grande souplesse et rapidité d'accès et de traitement des opérations portant sur des versions.

En d'autres termes, dans le cas où chacun des objets accédés est susceptible de figurer sous la forme d'au moins deux versions alternatives distinctes, on construit les relations résultats par stockage d'un numéro de version commun aux objets résultats, et de l'identifiant logique de chacun desdits objets résultats. Dans le cas où chacun des objets accédés est susceptible de figurer sous la forme d'au moins deux versions historiques distinctes, on construit les relations résultats par stockage, pour chaque objet résultat, de triplets constitués de l'identifiant logique de l'objet, de son numéro de version, et d'une étiquette de version.

L'implantation des versions au niveau de la mémoire virtuelle, comme préconisé par l'invention, permet des solutions très peu dépendantes de la sémantique des versions. Les principaux types de versions étudiés à l'heure actuelle sont des versions "alternatives", correspondant à différentes représentations ou vues d'un même objet, et les versions historiques. Les versions historiques représentent des valeurs successives d'un même objet. On peut distinguer des versions historiques systématiques, dans lesquelles chaque modification entraîne l'apparition d'une nouvelle version, des versions historiques périodiques, où les versions antérieures représentent la valeur de l'objet à la fin de chaque période, et des versions "manuelles", où l'usager décide, lors d'une modification, s'il va créer une nouvelle version ou non. Les mécanismes essentiels de l'accès aux versions par le cache-MMU s'appliquent aux accès les plus fréquents pour l'ensemble de ces types de versions. Ainsi, l'existence d'une "version zéro" 33, contenant l'étiquette 22 et l'identifiant physique 21 de la version la plus récente, permet d'utiliser le plus souvent un mécanisme d'accès direct par des indirections pour accéder à des versions historiques. En effet, la version la plus récente est souvent la plus accédée. les versions périodiques peuvent aussi être accédées par leur numéro de version 20, qui est le même pour toute la relation.

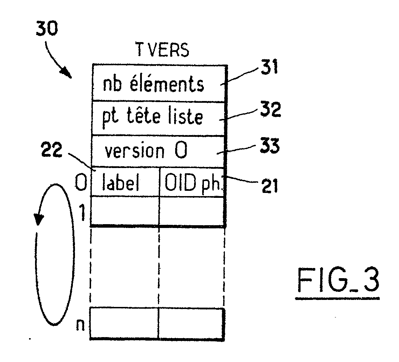

Cependant, certaines caractéristiques de l'implantation permettent une implantation efficace de certains choix sémantiques. En particulier il doit être possible de limiter le nombre de versions historiques accédés par le mécanisme de mémoire virtuelle, les versions plus anciennes étant éventuellement rangées dans une archive ou dans un autre segment. Ceci est d'autant plus nécessaire que le nombre de versions est en pratique limité par la taille maximum d'une table TVERS (de l'ordre d'une page). Il doit d'autre part être aisé d'accéder aux versions dans l'ordre chronologique, sans effectuer de décalage des éléments de la table des versions lorsque l'on ajoute un nouvel élément et lorsqu'on supprime l'élément le plus ancien. La solution préférentielle pour atteindre ces divers objectifs, est d'organiser la table des versions 30 comme une liste circulaire rangée dans un tableau. L'entête du tableau va donc contenir le nombre d'éléments 31 et un numéro 32 (ou un pointeur) de premier (ou dernier) élément dans l'ordre chronologique. Cette organisation est présentée à la figure 3. Dans la mesure où les tableaux sont définis comme des objets formés d'un nombre d'éléments et d'une suite d'éléments, le numéro de premier élément sera une interprétation du premier élément du tableau.

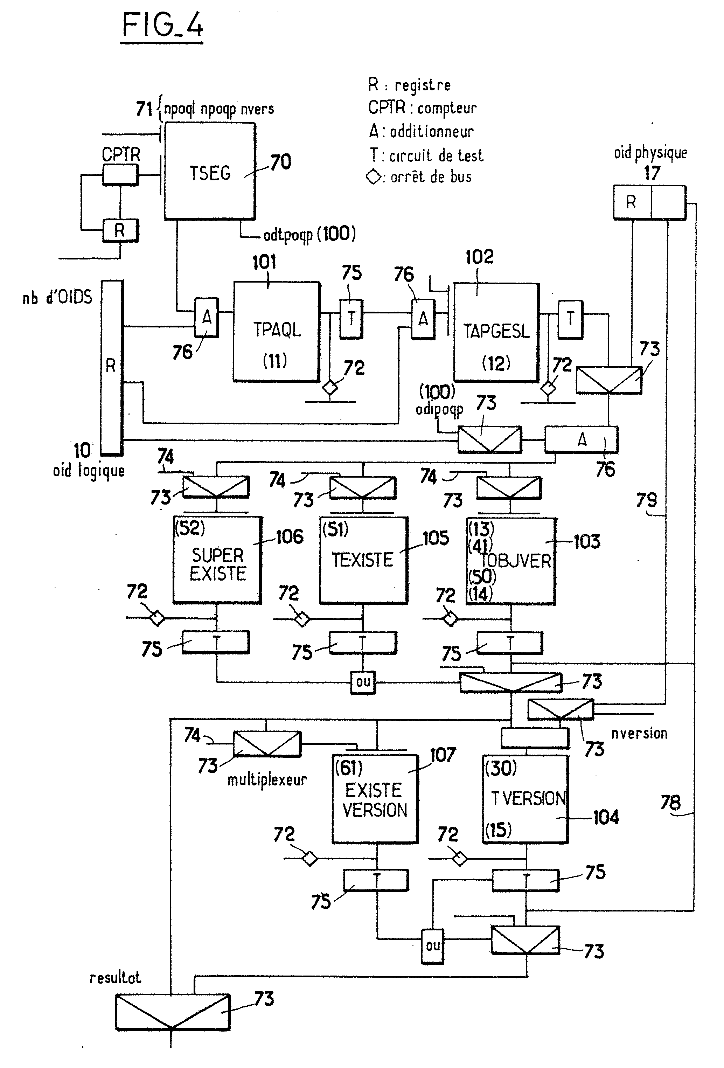

La figure 4 représente un premier mode de réalisation avantageux d'une implantation pratique du second étage supérieur d'adressage de l'unité de gestion incluant les versions d'objets suivant l'invention.

L'unité de gestion est principalement composée de plusieurs espaces mémoire 101, 102, 103, 104, 105, 106, 107 interconnectés sans passer nécessairement par le bus de la machine hôte, d'additionneurs et de multiplexeurs. Dans la solution préférentielle, les espaces mémoires de la version initiale sont conservés. Le cache-MMU étendu inclut donc les espaces TPAQL 101, TPAGESL 102 et TOBJVER 103.

Ce dernier espace TOBJVER 103 contient trois jeux de tables, à savoir TOBJ 13, TVERROUS 41, et TCOPIES 50. Les deux derniers jeux de tables cités, TVERROUS 41 et TCOPIES 50 correspondent au stockage d'informations de verrouillage d'accès aux objets adressés. Bien que n'appartenant pas à l'objet proprement dit de la présente demande, ces jeux de tables sont mentionnés dans le but de présenter un mode de réalisation opérationnel de l'unité de gestion mémoire selon l'invention.

Le cas échéant, et pour information, on pourra trouver le détail de la structure et du fonctionnement de ces jeux de tables d'informations de verrouillage dans la demande française prioritaire n°88 05631 déposée le 27 avril 1988.

Le cache-MMU contient aussi trois espaces mémoires supplémentaires : TVERSIONS 104 et TTEXISTE 106, qui contient les attributs SUPEREXISTE 52, et EXISTE VERSIONS 107, qui contient les masques 61 sur les verrous de versions. Comme pour TEXISTE 105 par rapport à TOBJVER 103, l'adresse d'un objet de TTEXISTE 106 exprimée en bits, est la même que l'adresse de l'objet correspondant de TEXISTE 105 exprimée en mots. Avec la taille des mots utilisée, le rapport de ces deux espaces mémoire dans la solution préférentielle est donc de 32.

Les espaces mémoires et ensembles de tables TTEXISTE 106, (SUPEREXISTE 52 et EXISTE VERSIONS 107), et TEXISTE 105 correspondent à des tables de stockage et de gestion d'informations de verrouillage d'accès aux objets, sur deux niveaux. Ces jeux de tables sont indépendants de l'objet de la présente demand, de la même manière que les espaces mémoires TVERROUS 41 et TCOPIES 50 précités. On trouvera, pour information, des détails sur la structure et l'utilisation de ces jeux de tables dans la demande prioritaire française déjà citée.

Un petit espace mémoire supplémentaire, d'une trentaine de mots, peut contenir les bases d'adresse des tables de paquets logiques et physiques des segments accédés par le cache-MMU (nous l'appellerons TSEG 70).

Dans ce premier mode de réalisation, les ensembles de tables de paquets physiques TPAQP 14, et les ensembles de tables de pages physiques TPAGP 15 sont stockés respetivement dans les espaces mémoires 103 et 104 contenant déjà des ensembles de tables 13, 41, 50 d'une part, et 30 d'autre part, appartenant au premier étage supérieur d'adressage 18. De cette façon, il est possible de reboucler sur l'unité de gestion mémoire de la figure 4, à travers l'une des connexions 78 ou 79 fournissant l'adresse logique intermédiaire 17 en sortie du premier étage supérieur d'adressage 18.

En d'autres termes, dans ce mode de réalisation, l'unité de gestion est caractérisée en ce que lesdits ensembles de tables 11, 12, 13 du premier étage supérieur d'adressage 18 sont répartis dans un jeu d'au moins deux espaces mémoires 101, 102, 103, 104 distincts, et organisé de façon hiérarchique, en ce que les ensembles de tables 14, 15 dudit second étage inférieur d'adressage 19 sont répartis dans au moins certains desdits espaces mémoires 103, 104 de façon à respecter la hiérarchie desdits ensembles de tables 14, 15, et en ce que chacun desdits espaces mémoires 103, 104 est associé à des moyens de commandes d'accès 73, 76, 78, 79 de façon à être accédé en deux cycles alternés :

- un premier cycle de détermination de ladite adresse logique intermédiaire à partir de ladite adresse logique source, au cours duquel sont adressés sélectivement les ensembles de tables 11, 12, 13 appartenant audit premier étage supérieur d'adressage (18),

- un second cycle de détermination de ladite adresse physique résultat, à partir de ladite adresse logique intermédiaire 17, au cours duquel sont adressés sélectivement les ensembles de tables 14, 15 appartenant audit second étage inférieur d'adressage 19, lesdits moyens de commande d'accès comprenant des moyens de rebouclage 78, 79 à l'intérieur dudit jeu d'espaces mémoires 101, 102, 103, 104 pour l'enchaînement dudit premier cycle audit second cycle.

On notera que les ensembles de tables, de paquets physiques 14 et de pages physiques 15 peuvent être stockés à des niveaux différents de la hiérarchie d'espaces mémoires 101, 102, 103, 104, pourvu que soit respecté leur ordre hiérarchique propre. Ainsi, moyennant une modification des circuits de rebouclage et de commande d'accès 78, 79, 73, 76, il serait possible, notamment, de stocker l'ensemble de tables de paquets physiques 14 dans l'espace mémoire 102 et l'espace mémoire 103 respectivement, l'adresse physique résultat étant prélevée en sortie de cet espace mémoire 103.

Chacun desdits ensembles de tables dudit premier étage supérieur d'adressage 18, second étage inférieur d'adressage 19 respectivement, est associé à des moyens de sélection d'un enregistrement dans l'ensemble de tables, lesdits moyens de sélection recevant en entrée, d'une part, l'adresse indirecte contenue dans un champ de l'adresse logique source 10, de l'adresse logique intermédiaire 17 respectivement, ledit champ étant de même niveau que l'ensemble de tables d'adressage associé, et d'autre part, pour les ensembles de tables d'adressage autres que l'ensemble de tables de plus haut niveau de chaque étage, une information secondaire d'adressage provenant de l'ensemble de tables de niveau supérieur, et fournissant en sortie l'adresse sélectionnée d'accès à un enregistrement dudit ensemble de tables associé.

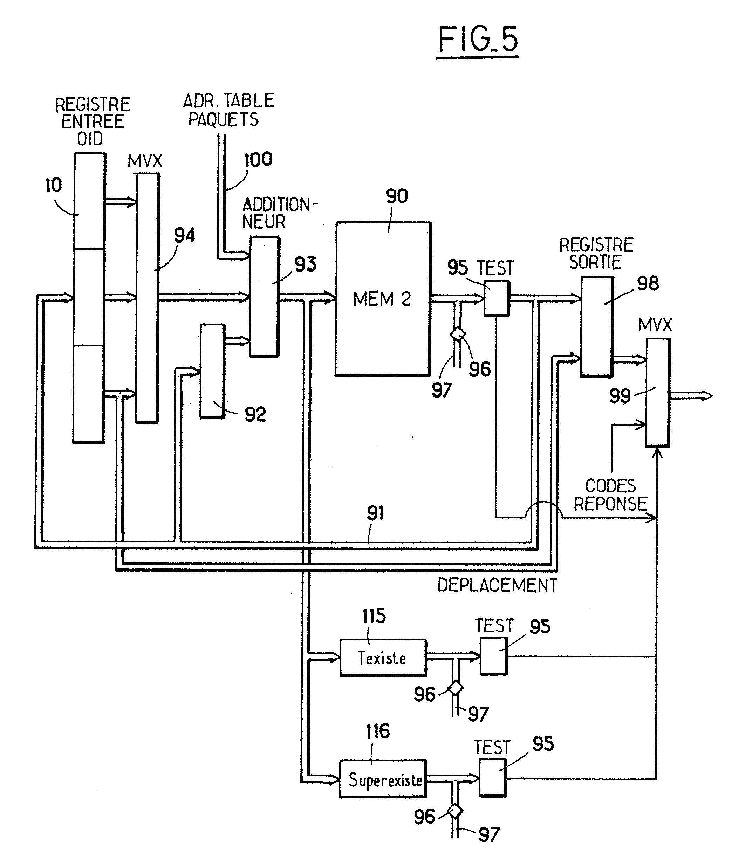

Dans le mode de réalisation de la figure 5, l'unité de gestion de mémoire est caractérisée en ce que tous les ensembles de tables 11, 12, 13, 14, 15 desdits premier et second étages d'adressage 18, 19 sont regroupés dans un espace mémoire unique 90,

et en ce que ledit espace mémoire 90 est associé à des moyens de regroupage et de commande d'accès 91, 92, 93, 94 audit espace mémoire 90, de façon à assurer la séquence d'accès successifs auxdites tables 11, 12, 13, 14, 15 contenus dans ledit espace mémoire 90 au cours d'une opération donnée d'association d'une adresse physique de sortie à une adresse logique source.

Dans le schéma, les moyens de rebouclage 91 sont constitués par un bus alimentant d'une part le registre d'entrée des identifiants 10, 17, et d'autre part, un registre non transparent 92 connectant un circuit additionneur 93 en entrée de l'espace mémoire 90. Le circuit additionneur 93 reçoit également les informations provenant du multiplexeur d'entrée 94, et, pour la détermination de l'adresse physique résultat à partir de l'adresse logique intermédiaire, au moyen du second étage inférieur d'adressage, une adresse de tables de paquets 100. (On retrouve également cette adresse de tables de paquets physiques en entrée d'un multiplexeur 73 dans le premier mode de réalisation de la figure 4.

Les informations secondaires d'adressage délivrés par l'espace mémoire 90 traversent ensuite un circuit de tests 95.

L'adresse physique résultat est enfin délivrée à travers un registre de sorties 98 et un multiplexeur 99.

La mise à jour des informations secondaires d'adressage contenues dans l'espace mémoire 90 est effectuée par l'intermédiaire du bus 97 sur lequel est monté l'arrêt de bus 96.

L'implantation de la figure 5 inclue également des espaces mémoires 115, 116 correspondant à des ensembles de tables de masquage de verrous TEXISTE et SUPEREXISTE. Comme pour le mode de réalisation de la figure 4, ces espaces mémoires 115, 116 peuvent être accédés en parallèle à l'espace mémoire 90. Les espaces mémoires 115, 116 comportent, en sortie, d'une part des circuits tests 95, et d'autre part des bus 97 et arrêts de bus 96 servant à leur initialisation et/ou mise à jour.

Le cache-MMU possède deux modes d'accès : le mode direct et le mode transparent.

En mode transparent, les espaces mémoires du cache sont accédées par leurs adresses à travers le bus de la machine hôte, comme pour n'importe quelle mémoire. Ce mode est utilisé notamment pour les initialisations et pour les swaps, et pour l'accès à des objets dont une partie de tables n'est pas présent dans le cache-MMU.

En mode direct, les tables sont adressées par l'intermédiaire d'un identifiant logique 10, chaque niveau de table participant à l'adressage de la table de niveau inférieur. La sélection de l'un des deux modes s'effectue par l'écriture d'un mot d'état dans le registre STATUS du cache-MMU.

Nous n'envisagerons maintenant que l'accès direct, qui peut se faire avec ou sans gestion des verrous.

Les ports d'entrée du cache-MMU sont alors le registre STATUS, le registre de numéro de segment et le registre de numéro de version. Le port de sortie contient selon le cycle considéré et le mode de fonctionnement une adresse d'objet ou de valeur de verrou. Ces deux types de résultat peuvent également être délivrés dans deux ports de sortie différents. L'adresse d'objet peut être remplacée par une adresse de début de la table des versions, destinée à permettre la lecture de celle-ci en mode transparent. Certaines valeurs spéciales de l'adresse d'objet et de la valeur de verrou indiquent que ces informations n'ont pas été trouvées ou représentent d'autres codes réponses. Le fonctionnement du cache-MMU est à séquencement par les données, l'écriture d'un résultat dans le ou les ports de sortie est déterminé par l'écriture d'un identifiant logique dans le port d'entrée. Un mécanisme de synchronisation utilisant le protocole du bus de la machine hôte peut éventuellement être utilisé. Dans certains cas, les relations temporaires dont les identifiants sont décodés par le cache-MMU sont formées de n-uplets de longueur fixe composés d'identifiants de plusieurs relations permanentes, et éventuellement d'autres informations, comme les étiquettes de versions. Il est souhaitable de ne pas avoir à transmettre un nouveau numéro de segment et de version à chaque décodage d'identifiant appartenant a une relation différente. Dans ce cas, la solution préférentielle est de ranger les adresses de tables de paquets logiques et physiques et le numéro de version pour chaque identifiant du n-uplet dans un groupe de lignes 71 contiguës de TSEG 70. Le parcours de ces lignes successives se fait alors de façon cyclique lors du décodage de chaque n-uplet d'identifiants. Le contenu de TSEG 70 est alors chargé une fois pour toutes avant une opération ou un groupe d'opérations, la seule autre information nécessaire avant le début de décodage de plusieurs n-uplets d'identifiants de même type est l'adresse de début du groupe de lignes courant de TSEG 70 et le nombre de lignes de ce groupe. Ces informations sont rangées dans des registres ad hoc en mode transparent. Un séquencement minimum du

7

cache-MMU est alors nécessaire.

Les opérations d'accès en lecture réalisées dans le cache-MMU étendu utilisent les calculs suivants:

* numéro relatif de segment (pour le cache-MMU)*2 + type de table adressée -> adresse de table des paquets physique ou logique (facultativement)

* adresse de table des paquets + numéro de paquet logique -> adresse de table de page logique

* adresse de table des pages logique + numéro de page logique*4 + numéro de colonne (objets, verrous ou copie) -> adresse de table des objets ou de table des verrous ou de table des copies

* adresse de table des objets (ou verrous ou copie) + numéro d'objet -> identifiant physique d'objet ou verrou ou copie de verrou ou adresse de table de version ou de table de verrous de versions ou de tables de copies de verrous de versions.

* adresse de table de versions (ou de verrous de versions ou de copie de table de verrous de versions) + numéro de version -> identifiant de version d'objet ou verrou de version ou copie de verrou de version

* adresse de table des paquets physique + numéro de paquet physique -> adresse de table des pages physique

* adresse de table des pages physiques + numéro de page physique -> adresse de page physique.

D'autre part, le cache-MMU permet des accès en écriture sans passer par le mode transparent. Les espaces mémoire sont connectés à un port d'entrée ou au bus de la machine hôte, selon le mode de fonctionnement, par un bus interne. Dans la réalisation préférentielle, la connexion de chaque espace mémoire avec le bus interne se fait par l'intermédiaire d'un arrêt de bus 72 (un NAND de chaque piste avec le signal d'arrêt). En effet, les pistes de données des autres espaces mémoire ne doivent pas être accédées, puisqu'elles transmettent une valeur aux pistes d'adresse des niveaux suivants. L'existence d'arrêts de bus 72 n'a pas d'incidence sur la synchronisation du bus en mode asynchrone. l'accès jusqu'à l'élément à écrire, se fait comme pour une lecture, en utilisant l'adressage de chaque niveau de table par le niveau immédiatement supérieur. Au cas où cet accès n'est pas possible (défaut d'objet dans le MMU), le cache-MMU délivre un code réponse qui indique à quel niveau est intervenu le défaut de page, comme on le verra au paragraphe suivant. Ceci permet ensuite d'effectuer la mise à jour du pointeur dans la page où a lieu ce défaut de page. Les indirections entre tables déterminent donc un chemin d'accès depuis la table de paquets logique jusque vers la table des pages physique, dont une partie inférieure est éventuellement non significative. L'écriture intervient le cas échéant au cours d'un des cycles qui suivent les cycles d'accès à l'objet. Si la partie non significative inclut l'espace mémoire sur lequel on cherche à écrire, l'adresse dans cet espace mémoire, est changée au cours d'un cycle suivant dans une adresse non significative ou bien ce qui est plus simple, l'écriture est abandonnée. Sinon, l'espace mémoire dans lequel on doit écrire, passe en mode écriture, et l'arrêt de bus entre le bus interne de la carte et l'espace mémoire est fermé.

Le cache-MMU permet aussi l'initialisation à zéro des masques de SUPEREXISTE 52 et TEXISTE 51. Dans ce but, les bits de poids faible de l'adresse de ces espaces mémoire, qui sélectionnent le bit, sont multiplexés avec un ensemble de bits à 1, à travers des circuits multiplexeurs 73. Il est donc possible de passer d'une écriture d'un bit à l'écriture d'un mot. Une autre solution possible est d'accéder à chaque fois au niveau d'un mot de ces espaces-mémoire, et de positionner ou tester le cas échéant un seul bit. Les opérations dont dispose le cache-MMU sur les espaces mémoire existe 51 et SUPEREXISTE 52 sont : l'initialisation d'un mot (adresses de poids faible à 1, valeurs de données à 0), l'écriture d'un bit à 1, l'écriture d'un bit à 0, la lecture d'un bit. L'initialisation d'un mot peut se faire au niveau de EXISTE 51 (avec positionnement d'un bit correspondant à 1 dans SUPEREXISTE 52) ou dans SUPEREXISTE 52. En cas de lecture d'un bit, celui-ci est testé par le cache-MMU et s'il est à zéro (dans EXISTE 51 ou SUPEREXISTE 52) la valeur de l'élément lu dans l'espace TOBJ 13 est remplacée par un code réponse, grâce à l'usage d'un multiplexeur en sortie de TOBJ 13. En fonctionnement non transparent, les bits de EXISTE 51 ou de SUPEREXISTE 52 ne sont jamais lus directement par la machine hôte, afin de permettre un accès parallèle à ces deux espaces mémoire et à TOBJ 13.

D'une manière générale, le procédé de mise à jour des espaces mémoires de ladite unité de gestion est caractérisé en ce que :

- on utilise comme adresse de mise à jour, l'identifiant logique, et éventuellement un numéro de version, ainsi que la référence à l'espace mémoire où doit s'opérer la mise à jour, ladite référence étant constituée d'un numéro d'espace mémoire, et ledit numéro d'espace mémoire étant décodé pour obtenir le signal d'autorisation d'écriture dans ledit espace mémoire considéré. Ce procédé de mise à jour des espaces mémoires de l'unité de gestion utilise les mêmes moyens de commandes d'accès aux ensembles de tables que lors du décodage d'une adresse logique au travers de ces ensembles de tables. La transmission de la nouvelle valeur de la donnée est limitée à l'espace mémoire et au cycle de fonctionnement adéquat, à l'aide de l'interposition d'arrêt de bus ou de dispositif équivalent entre les pistes de données de cet espace mémoire et le bus de la machine hôte, et par l'utilisation d'un moyen de séquencement de l'unité de gestion mémoire.

La gestion de l'accès aux tables s'effectue de la manière suivante.

Dans ce qui précède nous avons considéré que les adresses contenues dans les tables étaient des adresses physiques. Toutefois, il peut aussi s'agir d'identifiants ; dans ce cas, la table de niveau inférieur n'est pas présente dans le cache-MMU. Son adresse physique peut éventuellement être obtenue dans les tables des différents segments de relations de type "tables" (de façon préférentielle les tables des paquets, des pages, des objets et des versions ainsi que les verrous et copies correspondantes sont rangés dans des segments séparés, ce qui évite d'avoir plusieurs niveaux dans une même page ou un même espace mémoire),

8

normalement rangées dans le cache-MMU. Les identifiants et les pointeurs sont distingués par un bit de poids fort. Il est également possible de distinguer les données rangées dans le cache-MMU et dans la mémoire principale (soit par un bit, soit par la valeur du pointeur). Enfin, on peut envisager que le verrouillage d'un ensemble de versions d'un objet soit fait soit au niveau de cet ensemble, soit au niveau de chacune des versions, ce qui peut être distingué par un bit dans l'élément correspondant de la table TVERROUS 41. L'ensemble de ces cas particuliers est distingué du fonctionnement normal par un test effectué en sortie de chacune des tables où le problème est susceptible de se poser. L'existence d'un identifiant au lieu d'un pointeur ou tout autre cas particulier entraîne le remplacement de l'adresse d'objet ou du verrou par un code réponse, lui aussi distingué de la réponse normale par au moins un bit.

On peut aussi noter que la table des pages logique 11 a trois colonnes (en pratique, quatre dont une quatrième réservée, pour éviter les divisions par trois), alors que la table des pages physique 15 n'en a qu'une. D'autre part, le nombre des adresses d'objets en sortie de la TPAGP 15 est égal au nombre des identifiants de versions dans la TVERS 30, lorsqu'il existe des versions. Aussi, la table des paquets physiques est rangée dans la TOBJ 13, et la table des pages physique 15 est rangée dans la TVERS 30. De même, les verrous de versions et copies de verrous de versions sont rangés dans la TVERS 30.

Dans le schéma de la figure 4, les références T75 représentent des circuits de test, et les références A76 des circuits additionneurs.

Une évaluation du gain de performances dû au cache-MMU selon l'invention, a été réalisée.

Nous examinons d'abord le gain de performances pour une opération de sélection avec gestion de concurrence. Cette opération est susceptible de représenter une part importante de la durée de la plupart des requêtes, en particulier si les calculs de la sélection et des autres opérations sont accélérées par un processeur de bases de données utilisant les algorithmes de [FAUD87a]. Le systeme accede à l'objet et au verrou, puis réécrit éventuellement celui-ci après l'avoir modifié, si le tuple fait partie du résultat de la sélection. Nous supposons que la machine hôte est un 68020, et que les instructions résident dans le cache d'instructions. Par contre, nous supposons que leur éxécution n'est pas masquée par celle d'instructions précédentes. La durée des principales instructions est alors de 2 cycles pour un calcul simple, et de 4 cycles pour un branchement conditionnel avec une condition non vérifiée. la durée du cycle est de 60 ns. Nous admettons que la durée d'un accès mémoire à travers le bus du 68020 est de 250 ns (la durée minimum est de 180 ns). Avec une éxécution logicielle de l'accès aux tables, la durée de l'accès aux données et aux verrous est la suivante :

```
* lecture de l'identifiant logique              250 ns
* lecture du numéro de version                  250 ns
* lecture de l'adresse de la TPAQL              250 ns
* lecture de l'adresse de la TPAQP              250 ns
* accès à l'adresse de l'objet
        11 calculs d'adresse (1)               1320 ns
        6 accès mémoire                        1500 ns
        4 tests                                1440 ns
* accès au verrou de la version
        7 calculs d'adresse                     840 ns
        7 accès mémoire                        1750 ns
        7 tests                                2940 ns
(réécriture du verrou :s*250 ns, s'étant la sélectivité
de la sélection)
        TOTAL pour s=0 :                      10790 ns (1)


        Avec une éxécution par matériel, les délais
sont les suivants :
        * lecture de l'identifiant
        logique                                 250 ns
        * écriture de l'identifiant
        logique dans le cache-MMU               250 ns
        * lecture de l'adresse d'objet          250 ns
        * test de l'adresse                     360 ns
        * lecture du verrou                     250 ns
        * test du verrou                        360 ns
(plus réécriture du verrou: s*250 ns)
                                             --------
        TOTAL pour s=0 :                       1720 ns
```

Le gain de performances attendu est donc d'un facteur 6,3 environ. Il peut être augmenté du fait que le cache-MMU permet une simplification importante du code qui doit être exécuté à chaque tuple, et diminue donc la probabilité de débordement du cache d'instructions. Si le cache d'instructions déborde, il peut être nécessaire d'ajouter plusieurs microsecondes au total.

Une autre opération qui peut être fréquente, est l'initialisation d'un verrou. Cette opération est susceptible d'intervenir à chaque demande d'un verrou au cours d'une sélection, lorsque l'objet vérifie l'expression de qualification. Il s'agit donc d'une opération qui intervient moins souvent que l'accès à l'objet, puisque le ratio entre ces deux opérations est au plus égal à la sélectivité de l'opération d'interrogation (par exemple, la sélection). Lorsque le tuple de verrous correspondant au verrou n'existe pas, il faut aussi créer ce tuple dans le segment VERROUS 41 et/ou VERROUS_VERSIONS 42. Nous nous plaçons dans cette hypothèse défavorable, où le verrou est un verrou de version, et où la page de VERROUS et le tuple de VERROUS_VERSIONS n'existent pas. l'allocation de la page de VERROUS et du tuple de VERROUS_VERSIONS peut rendre un pointeur, à condition que ces objets contiennent les références arrière nécessaires pour mettre à jour ultérieurement les tables système en cas de besoin (par exemple en cas de swap en mémoire primaire). Dans ce cas, elle ne nécessite pas de création immédiate d'un objet avec mise à jour des tables du segment VERROUS_VERSIONS. Elle demande cependant en tout cas l'accès à une liste de pages libres et à une liste de trous dans ce segment.

Par logiciel, la durée de cette initialisation est la suivante :

```
* recherche du défaut de page
          6 calculs                              720 ns
(2 pour l'accès à TPAGL, 4 pour l'accès à TPAGL :
extraction du champ, décalage, addition de l'adresse de
table, addition du numéro de colonne)
          1 accès mémoire                        750 ns
          1 test                                 360 ns
(la tentative d'accès à l'objet donne pour resultat : 'le
```

pointeur sur la page de verrous dans la TPAGL est à NIL)

```
* allocation d'une page de TOBJ
          3 accès mémoire                        750 ns
          1 test                                 360 ns
* mise à jour de TPAGL                           250 ns
* accès à la liste de trous de VERROUS_VERSIONS
          2 calculs                              240 ns
(numéro de liste de trous, adresse dans le tableau
d'entêtes)
          4 accès mémoire                       1000 ns
          2 tests                                720 ns
* initialisation de SUPEREXISTE, TEXISTE
          4 calculs
(adresse de mot et adresse de bit)              480 ns
          2 accès mémoire                        500 ns
* mise à jour de TOBJ
          1 calcul                               120 ns
          1 accès mémoire                        250 ns
* initialisation de VERROUS-VERSIONS,
          3 calculs
(2 pour EXISTE et 1 pour TVERSIONS)             360 ns
          2 accès mémoire                        500 ns
          TOTAL
                                          _____
                                               7720 ns
```

En utilisant le cache-MMU cette durée devient :

```
* allocation de TOBJ et
d'un objet de VERROUS_VERSIONS :                3070 ns
* recherche des défauts de page sur
les verrous                                      860 ns
          (écrire l'identifiant,
          lire le verrou
          tester le verrou)
* écrire TPAGL                                   250 ns
* écrire TOBJ                                    250 ns
* écrire VERROUS_VERSIONS                        250 ns
                                          _____
          TOTAL                                 4680 ns
```

Le gain n'est ici que d'un facteur 1.65 mais il peut être beaucoup plus important si l'utilisation du circuit permet de faire résider une plus grande proportion des instructions dans le cache d'instructions. Rappelons qu'avec nos hypothèses, la présence de 10 instructions hors du cache peut se traduire par un délai supplémentaire de 2500 ns, et conduit donc à un ratio entre les deux solutions de l'ordre de 2.2. Notons que par objet accédé, l'incidence des initialisations de verrous est au plus s fois les valeurs précédentes, s étant la

11

sélectivité de l'opération (en général, la sélectivité de la sélection).

On constate donc que l'unité de gestion d'accès en mémoire de la présente invention permet un accès à l'objet et un contrôle de ses verrous dans un temps de l'ordre de 1.7 microsecondes par objet accédé. Ce temps de réponse est environ 6 fois plus rapide que l'éxécution des mêmes opérations par logiciel. Comme le temps d'accès aux objets est une part importante du temps de calcul total dans un système évolué de gestion de mémoire virtuelle, l'emploi de ce type de carte pour accélérer un gérant d'objets est très justifié.

Cette part du temps d'accès dans la durée d'une opération est en fait plus ou moins importante selon les algorithmes utilisés pour les calculs. La durée minimum est obtenue avec une machine base de données effectuant les opérations (telles que la sélection-jointure) dans le temps de transfert des données utiles sur le bus de la machine hôte. Les principes d'une telle machine utilisant un parcours appelé "RAPID", ont été décrits dans la demande de brevet américain n°USSN 061 642, qui a été déposée le 15/6/87 pour le compte du CNRS avec la participation de deux des inventeurs de la demande de brevet visée dans cette note. Avec cette machine, le temps d'éxécution d'une opération, par exemple d'une jointure de n tuples avec m, est égal au temps d'accès aux $n + m$ objets, plus le temps d'accès à un attribut de jointure et de transfert de cet attribut, qui peut être de l'ordre de 3 cycles bus pour chaque objet accédé (environ 750 ns). Il est alors particulièrement important que les temps d'accès soient réduits au minimum par l'usage d'une unité de gestion mémoire adaptée. A ce titre, la présence conjointe dans le portefeuille de brevets du CNRS de ce brevet américain et du brevet français visé par cette note, est particulièrement importante. Avec ce type de machine, le gain d'un facteur 6 obtenu par le cache-MMU se répercute en effet entièrement sur la durée de l'opération.

En combinant l'usage du cache-MMU et du processeur RAPID, il est possible de réaliser à chaque seconde, au moins une centaine de transactions comprenant des requêtes ensemblistes, avec des "temps de réflexion" dans chaque transaction de l'ordre de plusieurs dizaines de secondes, conduisant à plusieurs milliers de transactions simultanées. La combinaison de RAPID et du cache-MMU, constitue donc une solution pour évoluer vers les machines à taux de transactions par seconde, très élevés (de l'ordre de 1000 TPS avec 10 processeurs), pour un prix bas et dans un contexte relationnel étendu aux versions et aux identifiants logiques.

## Revendications

1° Unité de gestion d'accès en mémoire, destinée à être interposée entre l'unité centrale et des unités de mémorisation d'un ordinateur, notamment pour la gestion de bases de données, de façon à réaliser par exemple une opération d'association, à des adresses logiques sources appelées par des requêtes de l'unité centrale, des adresses physiques résultats d'objets stockés dans lesdites unités de mémorisation, et constituant le résultat de ladite association,
lesdites adresses logiques (10) invariantes en cas de changement de valeur ou de déplacement de l'objet, étant constituées d'au moins deux champs distincts contenant chacun une adresse indirecte, chaque champ correspondant à un adressage indirect de niveau différent,
unité du type comprenant une hiérarchie d'ensembles de tables d'adressage, contenues dans au moins un espace mémoire spécifique à ladite unité de gestion et susceptibles de délivrer chacune une information secondaire d'adressage lorsqu'elles sont accédées,
unité caractérisée en ce qu'elle comprend au moins deux étages de tables d'adressage regroupées au sein d'un premier étage supérieur (18) et d'un second étage inférieur (19) d'adressage,
en ce que ledit premier étage supérieur d'adressage (18) comprend un jeu d'au moins deux ensembles de tables d'adressage (12, 13) organisé de façon hiérarchique, chacun des ensembles de tables correspondant à un desdits niveaux d'adressage indirect de l'adresse logique source (10), ledit premier étage (18) fournissant en sortie une adresse logique intermédiaire (17) constituée d'au moins deux champs distincts correspondant chacun à un niveau d'adressage indirect distinct,
et en ce que ledit second étage inférieur (19) comprend un jeu d'au moins deux ensembles de tables d'adressage (14, 15) inférieurs organisés de façon hiérarchique, chacun des ensembles de tables correspondant à un niveau distinct d'adressage indirect de ladite adresse logique intermédiaire (17) fournie en sortie dudit étage supérieur d'adressage (18).

2) Unité de gestion d'accès en mémoire suivant la revendication 1, caractérisée en ce que lesdits ensembles de tables (11, 12, 13) du premier étage supérieur d'adressage (18) sont répartis dans un jeu d'au moins deux espaces mémoires (101, 102, 103, 104) distincts, et organisé de façon hiérarchique,
en ce que les ensembles de tables (14, 15) dudit second étage inférieur d'adressage (19) sont répartis dans au moins certains desdits espaces mémoires (103, 104) de façon à respecter la hiérarchie desdits ensembles de tables (14, 15),
et en ce que chacun desdits espaces mémoires (103, 104) comprenant un ensemble de tables est associé à des premiers moyens de commandes d'accès (73, 76, 78, 79) de façon à être accédé en deux cycles alternés :
- un premier cycle de détermination de ladite adresse logique intermédiaire à partir de ladite adresse logique source, au cours duquel sont adressés sélectivement les ensembles de tables (11, 12, 13) appartenant audit premier étage supérieur d'adressage (18),

EP 0 306 357 A1

- un second cycle de détermination de ladite adresse physique résultat, à partir de ladite adresse logique intermédiaire (17), au cours duquel sont adressés sélectivement les ensembles de tables (14, 15) appartenant audit second étage inférieur d'adressage (19),
lesdits premiers moyens de commande d'accès comprenant des premiers moyens de rebouclage (78, 79) à l'intérieur dudit jeu d'espaces mémoires (101, 102, 103, 104) pour l'enchaînement dudit premier cycle audit second cycle.

3) Unité de gestion d'accès en mémoire suivant la revendication 1, caractérisée en ce que tous les ensembles de tables (11, 12, 13, 14, 15) desdits premier et second étages d'adressage (18, 19) sont regroupés dans un espace mémoire unique (90),
et en ce que ledit espace mémoire unique (90) est associé à des seconds moyens de commande d'accès comprenant des seconds moyens de rebouclage (91, 92, 93, 94) audit espace mémoire unique (90), de façon à assurer la séquence d'accès successifs auxdits ensembles de tables (11, 12, 13, 14, 15) contenus dans ledit espace mémoire unique (90) au cours d'une opération donnée d'association d'une adresse physique de sortie à une adresse logique source.

4) Unité de gestion d'accès en mémoire selon l'une quelconque des revendications 1 à 3, caractérisée en ce qu'au moins un desdits ensembles de tables d'adressage (11, 12, 13, 14, 15), espaces mémoires d'adressage (101, 102, 103, 104) respectivement, est associé à des moyens de test (75, 95) de la nature de l'information secondaire d'adressage délivrée en sortie dudit ensemble de tables, dudit espace mémoire unique respectivement,
et en ce que ladite unité de gestion comprend également des moyens d'utilisation de ladite information secondaire d'adressage et/ou d'annulation de l'adresse physique obtenue en sortie de l'unité de gestion, lorsque ladite information secondaire d'adresse délivrée renvoie à une adresse située hors de l'unité de gestion.

5) Unité suivant la revendication 1, caractérisée en ce que ledit premier étage supérieur (18) d'adressage comprend un ensemble de tables (30) d'adressage des versions d'objets accédés, du type des versions alternatives ou historiques des objets accédés,
en ce que ledit ensemble de tables des versions (30) est adressé à partir d'informations secondaires d'adressage contenues dans l'ensemble de tables d'adressage immédiatement supérieur et/ou d'un numéro de version fourni par l'unité centrale en entrée de l'unité de gestion d'accès en mémoire,
et en ce que chacun des enregistrements contenus dans ledit ensemble de tables des versions (30) comprend au moins un champ de stockage d'un identifiant physique de version, et un champ de stockage d'une étiquette de version.

6) Unité suivant la revendication 1, caractérisée en ce que chacun desdits ensembles de tables dudit premier étage supérieur d'adressage (18), second étage inférieur d'adressage (19) respectivement, est associé à des moyens de sélection d'un enregistrement dans l'ensemble de tables, lesdits moyens de sélection recevant en entrée, d'une part, l'adresse indirecte contenue dans un champ de l'adresse logique source (10), de l'adresse logique intermédiaire (17) respectivement, ledit champ étant de même niveau que l'ensemble de tables d'adressage associé, et d'autre part, pour les ensembles de tables d'adressage autres que l'ensemble de tables de plus haut niveau de chaque étage, une information secondaire d'adressage provenant de l'ensemble de tables de niveau supérieur, et fournissant en sortie l'adresse sélectionnée d'accès à un enregistrement dudit ensemble de tables associé.

7) Unité suivant la revendication 1, caractérisée en ce que les enregistrements de l'ensemble de tables d'adressage (13) de niveau inférieur dudit premier étage supérieur d'adressage (18) comprennent au moins un champ de stockage d'un numéro de page, et un champ de stockage d'une valeur de déplacement dans la page.

8) Unité suivant la revendication 5, caractérisée en ce que ledit ensemble de tables d'adressage des versions (30) est organisée sous forme d'une liste circulaire rangée dans un tableau.

9) Procédé d'utilisation d'une unité de gestion selon la revendication 5, dans le cas où chacun des objets accédés est susceptible de figurer sous la forme d'au moins deux versions alternatives distinctes, caractérisé en ce qu'on construit les relations résultats par stockage d'un numéro de version commun auxdits objets résultats, et de l'identifiant logique de chacun desdits objets résultats.

10) Procédé d'utilisation d'une unité de gestion selon la revendication 5, dans le cas où chacun des objets accédés est susceptible de figurer sous la forme d'au moins deux versions historiques distinctes, caractérisé en ce qu'on construit les relations résultats par stockage, pour chaque objet résultat, de triplets constitués de l'identifiant logique de l'objet, de son numéro de version, et de son étiquette de version.

11) Procédé de mise à jour des espaces mémoires de ladite unité de gestion selon l'une quelconque des revendications 1 à 8, caractérisé en ce que :
- on utilise comme adresse de mise à jour, l'identifiant logique, et éventuellement, un numéro de version, ainsi que la référence à l'espace mémoire où doit s'opérer la mise à jour, ladite référence étant constituée d'un numéro d'espace mémoire, et ledit numéro d'espace mémoire étant décodé pour obtenir le signal d'autorisation d'écriture dans ledit espace mémoire considéré.

13

## FIG_1

(10)

OID logique

TPAQL — 11
TPAGL — 12
TOBJL — 13 — OID physique — 17

OID physique

TPAQP — 14
TPAGP — 15
DONNEES — 16

18

19

## FIG_2

(20)

INDICE i
(n° version)

LABEL — 22

OID PHYSIQUE DE LA VERSION i — 21

FIG_3

# FIG_4

R : registre
CPTR : compteur
A : additionneur
T : circuit de test
◇ : arrêt de bus

71 { npoql npoqp nvers

CPTR

TSEG — 70

R

adtpoqp (100)

nb d'OIDS

101

TPAQL (11)    75 T    76 A    102 TAPGESL (12)    T

76 A

oid physique
17
R

R

10
oid logique

(100) odipoqp    73    A    76

79

74    74    74
73    73    73

(52) SUPER EXISTE — 106    (51) TEXISTE — 105    (13) (41) TOBJVER — 103 (50) (14)

72 ◇    72 ◇    72 ◇

75 T    75 T    75 T

ou    73

73
nversion

74    73
73

multiplexeur    (61) EXISTE VERSION — 107    (30) T VERSION (15) — 104

78

72 ◇    72 ◇

75 T    T 75

ou    73

resultat

73

FIG.5

Office européen
des brevets

**RAPPORT DE RECHERCHE EUROPEENNE**

Numero de la demande

EP  88 40 1819

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | THE 5th ANNUAL SYMPOSIUM ON COMPUTER ARCHITECTURE, 3-5 avril 1978, pages 123-130, IEEE, New York, US; L. BOI et al.: "An approach to a fault-tolerant system architecture" <br> * En entier * <br> --- | 1 | G 06 F  12/02 |
| D,Y | US-A-4 356 549  (CHUEH) <br> * Figure 1; colonne 4, ligne 54 - colonne 6, ligne 52 * | 1 | |
| A | --- | 2,7 | |
| P,A | DE-A-3 718 750  (HITACHI) <br> * Figures 3,4,5; colonne 4, ligne 24 - colonne 5 * <br> --- | 1,2 | |
| D,A | US-A-3 614 746  (KLINKHAMER) <br> * Figure 1; colonne 1, lignes 44-74 * <br> ----- | 1-3 | |

**DOMAINES TECHNIQUES RECHERCHES (Int. Cl.4)**

G 06 F  12/02
G 06 F  12/10
G 06 F  12/14
G 06 F  15/40

**Le présent rapport a été établi pour toutes les revendications**

| Lieu de la recherche | Date d'achèvement de la recherche | Examinateur |
|---|---|---|
| LA HAYE | 07-11-1988 | LEDRUT P. |